# EUROPEAN PATENT APPLICATION

(11) **EP 3 928 616 A1**
(43) Date of publication of application: **29.12.2021**
(21) Application number: 20759707.1
(22) Date of filing: 11.02.2020
(51) Int. Cl.: A01K 1/00, A01K 13/00

(54) **CALVING PEN**

(30) Priority: 22.02.2019 ES 201930154
(71) Applicant: La Parra del Soberal, S.L.U., 10859 Santibáñez El Alto (ES)
(72) Inventor: GARCÍA GONZÁLEZ, Juan, 10859 Santibáñez El Alto (ES); GARCÍA GONZÁLEZ, Jesús, 10859 Santibáñez El Alto (ES)
(74) Representative: Elzaburu S.L.P.
(86) International application number: PCT/ES2020/070093
(87) International publication number: WO 2020/169859

(57) **Abstract**

Improved farrowing crate for cows, in which the cattle have a peaceful atmosphere particularly suitable for the time of calving and the following days, so that both the physical and mental health of the mother and calf can be closely monitored and appropriate medical and other care can be administered during this period, and which has various safety systems for both the cattle and the user.

## Description

### Field of the Invention

The present invention relates to a farrowing crate, in particular a farrowing crate for cattle, which has various improvements compared to pens known in the prior art.

### Background Art

The term 'farrowing pen' traditionally refers to a construction used to keep livestock, historically sheep and goats, which has been used for various purposes such as protecting livestock from wild animals or storing livestock when they are not grazing. This type of construction has been very common in the north of Castile, particularly in the provinces of Soria and Guadalajara, and has traditionally been built with stone walls. Nowadays, hygienic regulations for livestock husbandry and the development of modern prefabricated industrial buildings have rendered farrowing pens largely useless for the protection and storage of livestock. For this reason, traditional stone-walled farrowing pens have evolved into metal crates which have been given other uses, such as the possibility of keeping the cattle confined to a specific location during manuring, or to provide them with a quiet environment suitable for calving, as many farmers have had the experience of seeing calves die after delivery for a variety of preventable reasons, including unintentional crushing of the calf by the mother, the calf's inability to suckle when losing sight of the mother, and even the mother's repudiation of the calf due to the stress caused by the environment around the mother at the time of calving.

Therefore, there is still a need to provide an improved crate in which the livestock can be provided with a suitable calm environment, especially at the time of calving and in the following days, so that the physical and mental health of the mother and calf can be closely monitored, appropriate medical and other care can be administered during this period, and to facilitate the development of the calf during these early days when its welfare is crucial for its further growth.

A number of documents exist in the prior art, but they are mainly oriented towards pigs and sheep.

For example, patent ES 0330287 describes sow farrowing pens in the form of a circular ring sector, in the narrowest part of which the individual sow feeder is located, enclosed in a central trellis of the farrowing pen, and in the widest part of which there is a small pen for piglets with a corresponding trap door.

Utility model ES 1045374 U describes a mobile farrowing pen for sows consisting of two enclosures, one being the farrowing pen itself, consisting of a rigid internal structure, and a second enclosure being the pen.

Similarly, utility model ES 1052335 U describes a farrowing pen for ewes with a hexagonal configuration.

More recently, utility model ES 1063177 U describes an anti-crushing device for piglets adaptable to any crate for piglet rearing, characterised in that it comprises: a support associated with a drive motor controlled by a sensor which, depending on the upright or lying position of the mother, causes the linear displacement of the support towards an operative position or towards an inoperative position; closing doors suspended from the aforementioned support by means of hinges which allow folding said doors, under their own weight, towards a vertical closing position and their free folding towards the outside of the crate, permanently allowing the piglets to exit; and stop means preventing the doors from folding towards the inside of the crate.

In addition, utility model ES 0222114 U describes a farrowing pen for sows consisting of extendible tubes that allow adjusting at least the length of the lateral frames of the farrowing pen to the size of the sow.

Similarly, patent ES 0327113 A1 describes farrowing pens for sows, the side walls of which allow the interior width of the pen to be adjusted to that of the sow, avoiding any counterproductive movement by enclosing the sow two transversal walls, one of which has an open area to allow the sow to feed.

Finally, utility model ES 0150879 U describes a farrowing crate specially designed for sows, characterised in that the crate can be adjusted to the size of the animal placed in it so that it fits snugly inside the crate without the possibility of tilting, the farrowing crate having two side exits so that the newborn piglets can be separated from their mother without preventing them from suckling from her at all times.

However, all of these devices, while substantially designed for sows or ewes, have certain shortcomings when used for cows, in some cases resulting from the substantially larger size and strength of a cow compared to a sow or ewe. In particular, in crates that are adjustable to the size of the animal by moving a movable inner partition, at the moment of moving the movable partition the cow may try to counteract the decrease in space that is taking place in her stall and try to regain the space that was initially available, and consequently move the movable partition in the opposite direction to that of the movement, which makes the manoeuvre difficult and may even cause injury to the operator who is moving the movable partition at that moment.

This problem has been solved in the present invention by incorporating a saw-tooth mechanism in the upper tubes that support the displacement of the movable partition. These saw teeth ensure that, once the partition has been displaced a few centimetres, the saw tooth prevents the partition from being moved back to its original position. Due to the consecutive saw teeth, operators can move the movable partition as far as necessary without fearing that a sudden movement of the cow could move the partition in the opposite direction and cause it to fall or even injure them.

Additional advantages of the farrowing crate of the invention are as follows:
The crate is also advantageously provided with oblique inner bars, arranged obliquely at least at the two corners of the crate intended to be the stall of the cow and the calf, thus limiting the space of the stall at these corners. In this way, the aforementioned oblique bars act as a stop to move the movable partition, preventing it from being able to move completely to the wall opposite to its starting position, which would reduce the space in the stall to zero, thus avoiding the risk of crushing a newborn calf that might inadvertently be in the stall at the time of the manoeuvre without the operator being aware of its presence. In the prior art there are documents such as patent publication EP 1075178 A1, originally published as WO99/56529, and EP 1579760 A2, in which bar systems can be seen to direct, limit or restrict the movement of the cow so that it moves to a certain position, or stays there until the farmer decides to move it. However, in the present case the oblique bars are in no way intended to direct, limit or restrict the movement of the cow to or in any particular position or location; in the present case the oblique bars are intended to limit the movement of the movable partition in order to prevent it from crushing the cow or calf. In fact, in the present invention, if the stall were much larger than the one shown in the figures, the cow could have much more freedom of movement and the presence of the oblique bars would not limit its movement in any way, unlike the systems described in the patent publications cited above, which are intended to limit or direct its movements. In other words, the oblique bars of the present invention are, unlike those described in the prior art, a safety mechanism for the cow or calf, and not a means of directing or keeping them in a particular location.

The crate also has an optional trapdoor in the lower part of the movable partition, either on the right or on the left half, which is designed to allow the calf, but not the cow, to be inserted or removed. Thus, by means of this trapdoor it is possible to introduce the calf into the cow's stall when it is to be suckled by the cow, and it can also be removed from the cow's stall when necessary, while keeping the cow and the calf under constant control. In this way it is possible to monitor the cow and her calf simultaneously, avoiding problems such as the cow and/or calf moving away from each other an unknown distance or direction, which could cause the calf to have difficulty suckling as it does not know where the cow is.

In addition, the crate also has an optional second trapdoor, located on one of the side walls of the crate. In contrast to the previous trapdoor, which is designed to allow only the calf in or out, the height of this second trapdoor is substantially the same as the height of the pen, allowing either the calf or the cow, or both, to be removed through the crate. This trapdoor therefore finds its main use when it is necessary or convenient to remove the cow, the calf or both.

Finally, the crate can also be optionally equipped with means of transport, making the farrowing crate of the invention portable. These means allow either towing the crate, in which case the crate comprises a crate lifting point on one wall of the crate, and at least two wheels on the wall opposite to the crate wall, to facilitate the towing operation, or other means allowing the crate to be fully supported in the air by a tractor or forklift truck, enabling the crate to be transported to the desired location.

Thus, the farrowing crate of the invention contains numerous improvements and refinements over those known in the prior art. Accordingly, the present invention seeks to provide a farrowing crate that improves upon some of the drawbacks found in the crates of the prior art, particularly when used in cattle instead of pigs or sheep.

### Detailed description of the invention

Accordingly, in one aspect the invention is directed to a farrowing crate for cows comprising four walls arranged in a generally rectangular shape, and a movable partition, arranged parallel to the two main sides, which can be made to slide parallel to said main sides so that the space of the stall available for the cow can be restricted at will, characterised in that the crate further comprises at least one oblique tube configured to limit the travel of the movable partition leaving at least the space for the cow, and a safety system in the form of saw teeth located on the two secondary walls of the crate, and which prevent the movable partition from being pushed back by the cow in the opposite direction of its displacement.

The invention is advantageous in that it provides an improved farrowing crate for cows that provides greater handling safety for the operator using it, while ensuring total control of both the cow and her calf in terms of having both perfectly located and comfortable, allowing a correct suckling of the calf during the first days after calving, as well as providing both of them with a stall in which they can be safe and comfortable, and also in which they can be provided with the health and medical resources (vaccinations, veterinary check-ups, etc.) that they may need.

An additional advantage comes from the existence of oblique inner bars at the inner corners of the cow's stall, which limit the movement of the sliding partition so that the space in the box cannot be reduced to zero, thus providing additional safety for the cow or calf that may be housed in the stall while the sliding partition is being moved.

A further advantage comes from the provision of hinged trapdoors on both the sliding partition, which in this case is designed to allow the calves to be taken in or out of the cow's stall only, and on one of the outer walls of the pen, which in this case is designed to allow both the calf and the cow to be removed for transport to another location when deemed appropriate.

Finally, a further advantage arises from the means provided that allow the farrowing crate to be portable, so that it can be used in various locations, as it can be easily transported with a tractor.

Throughout the description and claims, the word "comprises" and variations thereof are not intended to exclude other technical aspects, additives, components or steps. Additional objects, advantages, and features of the invention will become apparent to a person skilled in the art in view of the description, or can be acquired by reducing to practice the invention.

The following examples and drawings are provided for sake of clarity and are not intended to limit the present invention. Any value or range of values provided herein may be expanded or altered without loss of intended effect, as will be apparent to the person skilled in the art necessary for the understanding of the teachings disclosed herein, without any limitation other than the accompanying claims.

Reference symbols relating to drawings and included between parentheses in a claim are intended only to increase the clarity of the claim and should in no way be considered as limiting the scope of protection of the claim.

### Brief Description of the Drawings

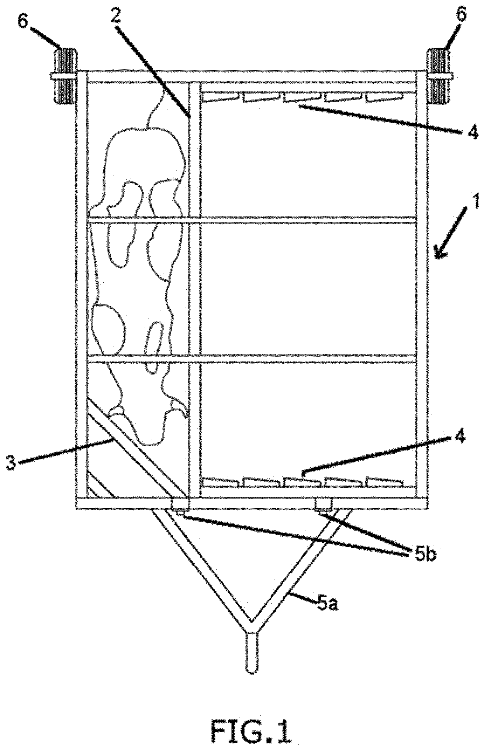

Figure 1 shows a plan view of the farrowing crate (1) of the present invention, showing a cow in the stall, where the movable partition (2) has been moved all the way into the cow stall until it has encountered the oblique bars (3) (only one is shown in the figure, but there may be more) which prevent the movable partition (2) from moving further, which could cause damage to the cow. This figure also shows the system of saw teeth (4) located on the side walls of the crate, which constitute the safety element that prevents the movable partition (2) from returning towards the operator while they are moving it due to a possible sudden movement of the cow. It also shows the means that allow the crate to be portable, such as the means of lifting (5a) and the means of attachment (5b) of the crate to the tractor or forklift truck, which allow it to be lifted completely in the air by means of, for example, a forklift truck, supported by the attachment means (5b), or to be lifted by the lifting means (5a) in order to allow it to be towed by means of the wheels (6).

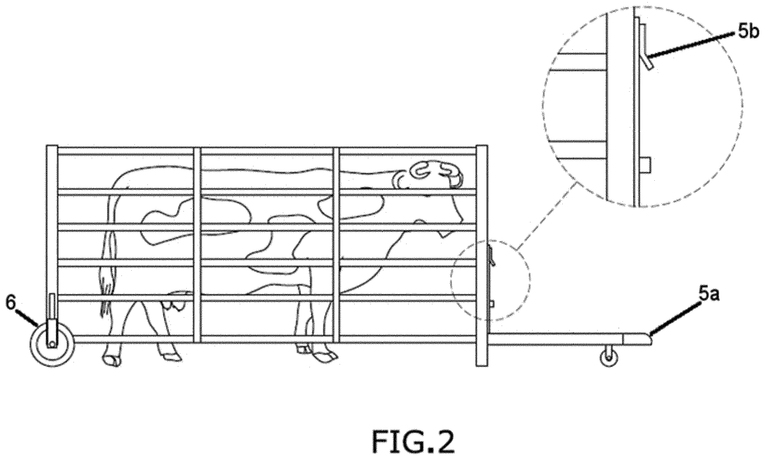

Figure 2 shows a side view of the farrowing crate, where the cow is inside the stall. Also shown are the attachment means (5b) which enable the farrowing crate to be lifted completely by means of, for example, a forklift truck, so that it can be moved. The lifting means (5a) are also shown, allowing the end of the farrowing crate to be lifted and then towed by means of the wheels (6).

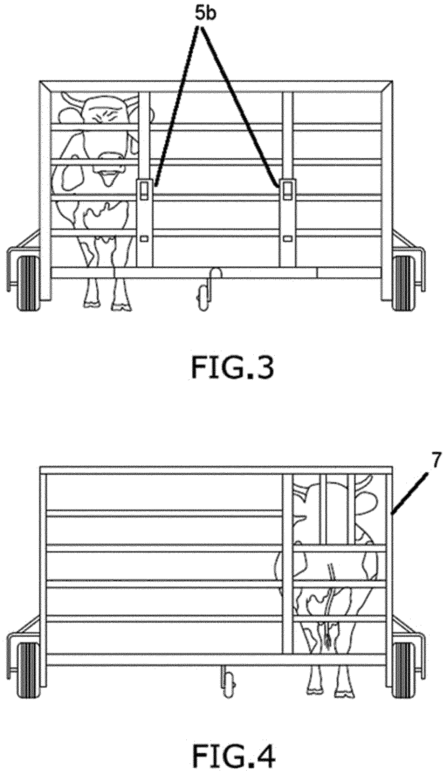

Figure 3 shows a front view of the farrowing crate. This figure also shows the attachment means (5b) which, in this case, are located on the front of the crate. These attachment means allow the crate to be fully lifted by a forklift truck.
Figure 4 shows a rear view of the farrowing crate wall, showing the trapdoor (7) designed to allow entry or exit of both the cow and the calf.

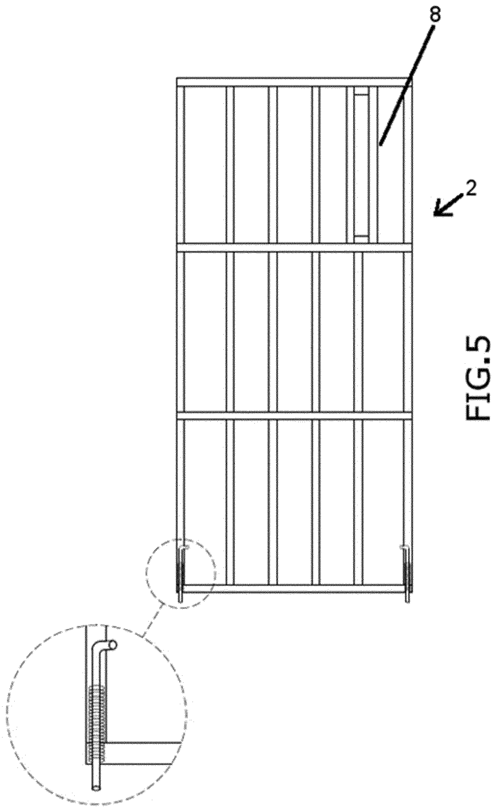

Figure 5 shows a detail of the movable partition (2), in which it is possible to see, in the lower right-hand corner, the trapdoor (8) designed to allow the calf to be removed from or introduced into the stall without the cow being able to escape.

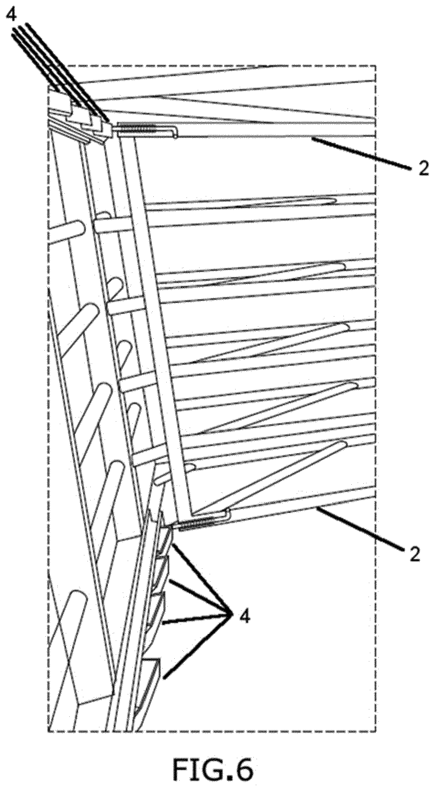

Figure 6 shows in detail and in perspective view the saw-toothed safety element (4), which prevents the movable partition wall (2) from being displaced by a sudden movement of the cow in the opposite direction to the direction of travel.

### Detailed Description of Some Examples of Embodiment

The farrowing crate (1) according to the present invention is generally made up of four walls arranged in a generally parallelepiped shape and more preferably in a rectangular shape, although it could also be square or have other geometrical shapes, even oval or other. These walls are advantageously made of metal tubes, preferably hollow to make the structure lighter, which give the crate both the necessary strength to withstand the forces of various kinds to which it will be subjected, and the lightness to be easily transported by a tractor, using the conventional means of transport in the field. Optionally, the crate can be fitted with a roof, which can also be made of metal pipes. The roof is not strictly necessary, but is advantageous to avoid possible damage to the cow and calf from the sky, e.g. attack by vermin, or even hail and snow. The farrowing crate (1) of the invention also comprises a movable inner partition (2), arranged longitudinally parallel to the two long sides of the pen, which can be made to slide, reducing the interior space of the pen at will until it meets the slanting bar(s) (3), which prevent the cow's stall from being excessively small. In this way, both cow and calf can be monitored, such as to provide adequate medical care from close by, without them escaping or even harming the operator by a kick from the cow. The farrowing crate of the invention also comprises safety means in the form of saw teeth (4) which block the backward movement of said partition and thus prevent the sliding movable partition (2) from suddenly returning towards the operator due to a sudden movement of the cow. These saw-tooth-shaped safety means (4) are located on the two shorter walls of the crate on the inside of the crate and may be located either on the top of the crate walls, on the bottom of the crate walls, or in any other direction.

In preferred embodiments of the invention, the farrowing crate of the invention also comprises means that allow the crate to be moved. These means may be either attachment means (5b) located on the front wall of the crate, allowing the crate to be completely lifted off the ground by a tractor or forklift truck and then moved to its new location, or lifting means (5a) in the form of a "V" shaped structure, allowing the crate to be lifted from one end only and then to be towed by a tractor, using the wheels (6) at the rear of the crate for this purpose. In the most preferred embodiments of the invention, the farrowing crate has both lifting (5a) and attachment (5b) means.

In another preferred embodiment of the invention, the movable inner wall (2) has a hinged trapdoor (8) on one of its sides and on the bottom thereof, either on its right or on its left side. This wall has a height allowing a calf to be inserted in or removed from the pen, but not the cow. In this way, the calf can be inserted when it is time to suckle, and can be taken out when it has finished, or in any case when it is deemed necessary.

In a further preferred embodiment of the invention, the rear wall of the crate has another trapdoor (7), but this time it is of the same height as the cow itself, and is designed to allow the calf, the cow or both to be taken in or out of the pen.

The present invention includes all possible combinations of the embodiments described herein, which are limited only by the scope of the appended claims.

## Claims

1. A farrowing crate (1) for cows comprising four walls arranged in a generally rectangular shape, and a movable partition (2), arranged parallel to the two main sides, configured so that it can be made to slide parallel to said main sides in such a way that the space available for the cow can be restricted at will, **characterised in that** the crate further comprises at least one oblique tube (3) configured to limit the travel of the movable partition (2), and a safety system in the form of saw teeth (4) located on the two secondary walls of the crate, and which prevent the movable partition (2) from being pushed back in the opposite direction to that of its displacement.

2. A farrowing crate (1) according to claim 1, further comprising on its front wall attachment means (5b) that allow it to be completely lifted from the ground by a tractor or forklift truck, in order to move it to a new location.

3. A farrowing crate (1) according to any of claims 1 or 2 above, further comprising on its front wall lifting means (5a) in the form of a "V" shaped structure, which allows the crate to be lifted only by its front part and towed by a tractor or wheelbarrow, using the wheels (6) provided at the back of the crate for this purpose.

4. A farrowing crate (1) according to any of the preceding claims, further comprising a trapdoor (8) on one side of the movable partition (2) which is of an appropriate height to allow a calf to be introduced into or removed from the cow's compartment, but not the cow.

5. A farrowing crate according to any of the preceding claims, further comprising a trapdoor (7) located in the rear wall of the pen, which is of the same height as the cow and which is intended to allow the calf, the cow or both to enter or leave the pen.
